Europäisches Patentamt

European Patent Office

Office européen des brevets

(11) Publication number: **0 180 666**
B1

# EUROPEAN PATENT SPECIFICATION

(45) Date of publication of patent specification: **26.07.89**

(51) Int. Cl.⁴: **A 22 C 13/00, B 29 C 53/30**

(21) Application number: **84201601.6**

(22) Date of filing: **05.11.84**

(54) A tubular casing for foodstuffs.

(43) Date of publication of application:
**14.05.86 Bulletin 86/20**

(45) Publication of the grant of the patent:
**26.07.89 Bulletin 89/30**

(84) Designated Contracting States:
**AT BE CH DE FR GB IT LI LU NL SE**

(56) References cited:
**EP-A-0 031 892**
**EP-A-0 087 241**
**DE-A-1 432 502**
**DE-B-1 253 093**
**FR-A-1 122 078**
**GB-A- 922 908**
**GB-A-1 151 687**
**GB-A-1 180 067**
**US-A-2 819 488**
**US-A-2 961 323**
**US-A-3 000 057**
**US-A-3 798 301**

(73) Proprietor: **International Chemical Engineering AG**
**Neugasse 13-15**
**Vaduz (LI)**

(72) Inventor: **Prohn, Christiaan Martin**
**Pflugstrasse 7**
**FL-9490 Vaduz (LI)**

(74) Representative: **Smulders, Theodorus A.H.J., Ir. et al**
**Vereenigde Octrooibureaux Nieuwe Parklaan 107**
**NL-2587 BP 's-Gravenhage (NL)**

Courier Press, Leamington Spa, England.

## Description

The present invention relates to tubular casings for foodstuffs and more in particular to a method and an apparatus for manufacturing such casings of thermoplastic synthetic resin material.

For packaging foodstuffs in tubular casings, such as the stuffing of so-called sausage skins, use was made in the past of intestines of sheep, hogs and cattle. Drawbacks inherent in using these are that they are available in limited quantities only, their limited sealing capacity, thus limiting the preservability of foodstuffs packaged therein and in case of mechanical stuffing, their irregular cross-sectional form and wall thickness impeding high stuffing rates as automation progressed.

Partly because products other than meat products, such as cheese, ice-cream and the like, have also come to be marketed in casings, use was increasingly made of skins of synthetic plastics material. in particular a thermoplastic synthetic resin material for foods such as liver sausage, ice-cream and the like, in which cases the casing need not be edible, or cellulose hydrate and like materials, from which edible casings can be made.

Casings made e.g. from thermoplastic synthetic resin material can be made in any desired size and in any desired wall thickness in an accurate manner by means of extrusion.

The thus extruded continuous tubes are rolled up in flat condition. The tube material of such rolls is then shirred, i.e. while pleating the tube wall, compressed to so-called caterpillars of limited length, e.g. 50 cm, and in this form or cut into short sections closed at one end (e.g. with a suspension rope loop) supplied to manufacturers of sausages and other paste-like products, suitable for being stuffed into such casings. For the purpose of packaging the products, a mass thereof is extruded from a nozzle on which a caterpillar casing is fixed. During stuffing, the pleats in the casing are stretched, thus producing a continuous round bar of sausage, cheese spread and the like which can be subdivided into pre-selected bar lengths during stuffing by periodic constriction. In principle, all products thus packaged have a purely round cross-section.

It has now been found that, probably for nostalgic reasons, there is again a need for foodstuffs packaged in tubular casings with the irregular appearance of products packaged in natural intestine casings, and consequently, it is an object of the present invention to provide synthetic plastics casings which, after having been stuffed with a paste mass, impart such an irregular appearance to the packaged product.

The invention is based on the insight that the desired irregular form of the end product resembling a stuffed natural intestine can be obtained by subjecting a casing tube of regular form and wall thickness, obtained by extrusion of thermoplastic material, to a heat treatment at random places.

During extrusion of the tubular casing of thermoplastic material, this is often stretched both longitudinally and peripherally, i.e. the molecules in the material are oriented longitudinally and transversely, thereby reducing the thickness of the material. If such stretched material is heated locally, the stretched condition introduced earlier in these places is removed partly or entirely. The material shrinks and the wall thickness again increases locally. When a thus pre-treated length of tube is stuffed under pressure with paste, the shrunk places in the tube wall will remain visible as constrictions, resulting in a packaged product in the form of a bar having local bulges.

The heating of a tube in places irregularly distributed longitudinally and peripherally along the casing tube can be effected according to the invention in a simple automated manner by at least temporarily shirring successive tube lengths while simultaneously forming irregular pleats in the tube wall and conducting the same in this shirred form along heating means.

The surface portions of the shirred tube portion facing the heating means, viz. relatively wide folds, sharp pleats and irregularly distributed transition zones will receive more heat from the heating means than the remainder of the tube.

In a further embodiment of the invention, the formulation of irregular pleats in the tube wall is effected by exerting an external force, with force components of varying magnitude oriented towards the tube axis and in the direction of advance of the tube.

Thus, successive tube sections are shirred, thereby forming pleats not extending according to a regular helical pattern but being oriented transversely to the tube with short and variable lengths as viewed in circumferential direction. The irregular pleats pass into and/or overlap adjoining, likewise short pleats.

It is to be noted that irregular shirring is known per se in the prior art, for example, from US-A-2,819,488 or GB-A-922,908, however, the shirring is not a preparation for a subsequent heat treatment step intended to produce the appearance of a product packaged in natural intestine.

The present invention also relates to an apparatus for performing the method.

Prior art apparatus for forming extruded tubular casings into the earlier mentioned caterpillars comprise a mandrel, means for axially guiding a casing tube around the mandrel, said guide means comprising a pair of pull-through rolls, means for maintaining the tube in the mandrel zone in inflated condition, and shirring means arranged laterally of the mandrel.

In an apparatus described in German Auslegeschrift 1,253,093, air is introduced into the tube via the hollow mandrel and an axially movable counter-bearing is provided downstream of the shirring means, said shirring means being designed as wheels having radially extending flexible strips of identical lengths. By means of the flexible strips of the rotating wheels, pleats are formed in the tube wall and the pleated tube is shirred against the counter-bearing, thereby forming a caterpillar. Although this prior art technique undoubtedly aimed at obtaining as regular pleats as possible, and hence a caterpillar as stable as possible, newer techniques have meanwhile been developed wherein use is made of shirring elements of gear and worm wheel configurations adapted for planetary movement about the mandrel and with which, instead of a large number of pleats, a single sharp, helical, continuous pleat can be formed in the tube.

However, for the purposes of the present invention there is precisely no need for regular shirring, not even for the formation of a caterpillar. Essential for the invention is that at least temporarily pleats or folds are formed in the tube wall and that the outwardly oriented portions of these pleats or folds are subjected to heating.

Consequently, the apparatus according to the invention is characterized in that heating means are arranged behind the shirring means.

Since a caterpillar is not directly the ultimate object of the invention, and, consequently, a counter-bearing against which a caterpillar can be formed is not necessary, the mandrel according to the invention may be a vertically oriented, floating mandrel, with the tube pull-through rolls being arranged underneath and above the mandrel.

Thus, the tube material can be unwound from a supply reel, subjected to the desired pleating and heat treatment and selectively coiled or subjected to a caterpillar formation treatment.

In order to effect as irregular shirring as possible, the shirring means according to the invention may be wheels having projections of different lengths, with the wheels being disposed relatively to each other in such a manner that at the moment when a relatively long projection is in contact with the tube wall, the opposite wheel does not make contact with the tube or makes contact therewith with a relatively short projection.

Alternatively, the shirring means may be adapted for directing air jet pulses to the tube wall.

One embodiment of the casing processing apparatus will now be described, by way of example, with reference to the accompanying drawings, in which:

Fig. 1 diagrammatically shows a side view of the apparatus;

Fig. 1a shows a variant of the apparatus shown in Fig. 1;

Fig. 2 is a perspective view of a shirring wheel; and

Fig. 3 shows two products packaged in the tube casing according to the invention.

As shown in the drawings, flattened tube material 2 of thermoplastic material made in a normal manner by extrusion with stretching, is run off a supply reel 1 upwardly over a vertically oriented mandrel 3.

The mandrel is fitted at the bottom with a cylindrical centring member 4 having narrowed ends 5 and 6. By means of positioning rings 7, 8 disposed about the ends 5, 6, possibly comprising air jets (not shown) or centring wheels mounted around, the mandrel 3 is spatially kept in place. The casing tube 2 is drawn about the mandrel 3 by means of sets of variably driven pull-through rolls 9, 10 aided by shirring means be described hereinafter, and supplied to winding reels 11, 12 driven by means of a slip coupling. The casing tube 2 is guided through the spaces between the centring member 4, in particular the narrowed ends 5, 6 thereof, and the positioning rings 7 and 8. Consequently, the ascending tube 2 will tend to lift the mandrel 3. This is counteracted by the weight of the mandrel 3 and the centring member 4.

By means of a hypodermic needle, not shown, a quantity of air is introduced into the tube in the region between the pull-through rolls 9, 10, preferably just before the rolls 10, which air is retained by the rolls, which squeeze the tube shut, as tube 2 advances in the region around the mandrel 3.

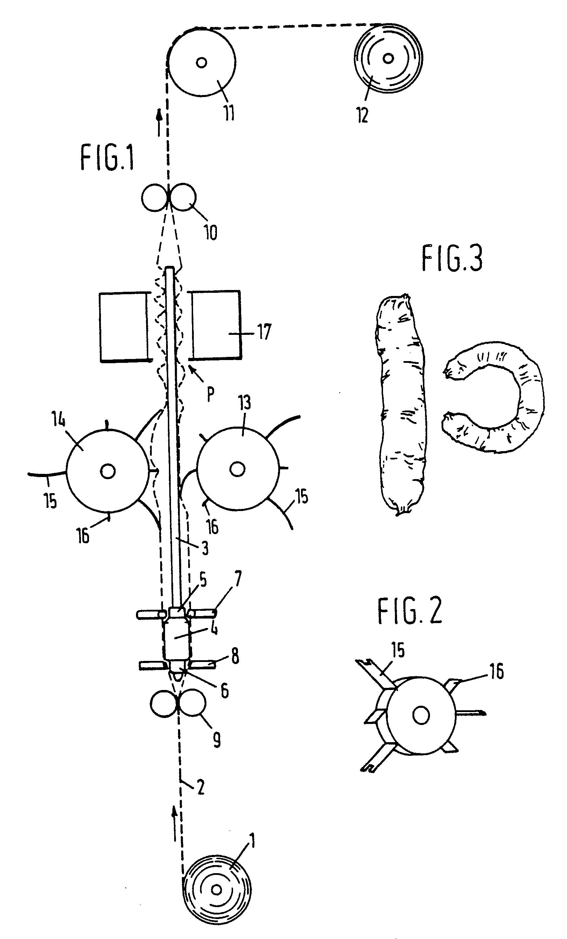

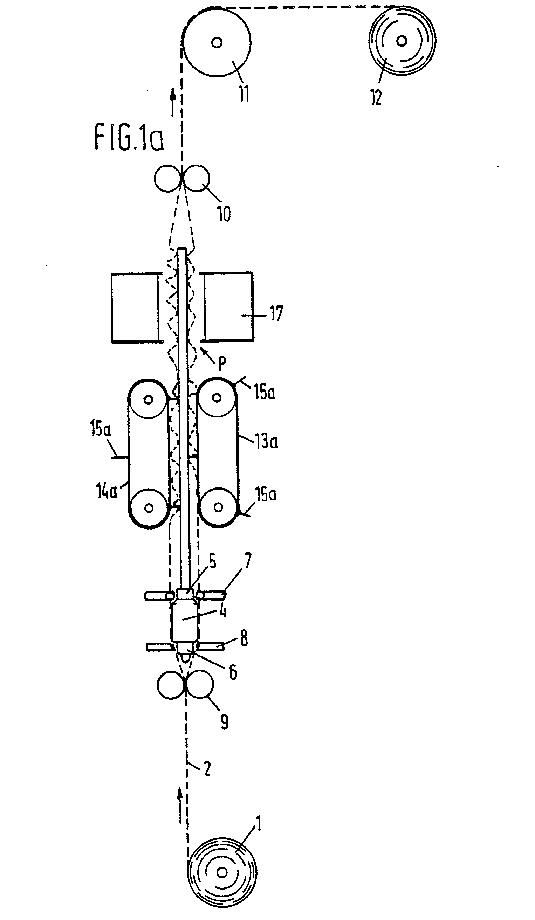

Above the centring means 7, shirring means are provided beside the mandrel 3. These may e.g. be air jet means or, as shown in Fig. 1, shirring wheels 13 and 14 with projecting strips 15 and 16 of different lengths, while Fig. 1a shows shirring belts 13a, 14a with projections 15a. The wheels 13, 14 (and the belts 13a, 14a) are out of phase in such a manner that whenever, as depicted, a long strip 15 of the wheel 13 is in engagement with the inflated tube 2, the opposite wheel 14 is either not in engagement with the tube 2, or is in engagement with the tube but only through a short strip 16.

The effect of the rotating wheels, belts or air pulses on the tube 2, without using any counter-bearing, is an irregular shirring indicated by the arrow p. In the area between the shirring means 13, 14, 13a, 14a and the upper pull-through rolls 10, there are disposed heating means 17, e.g. infrared radiators or a hot air blower or, when the mandrel is in a horizontal position a hot liquid bath, by means of which the tops of the folds facing the heating means 17 are brought at such a temperature that the stretched condition earlier introduced in the tube 2 during the extrusion under elongation is at least partly eliminated.

The thermoplastic casing tube 2 collected on the winding reel 12 no longer has the uniform wall thickness and cross-section of the tube unwound from the supply reel 1.

When the thus treated tube 2, whether or not previously compressed to a caterpillar, is stuffed with paste-like material, the product will assume an irregular appearance, i.e. the appearance of a product packaged in natural intestine with constrictions in places where the casing has been subjected to a heat treatment between heating means 17. Examples of such packaged products are shown in Fig. 3, on the left a more or less straight bar and on the right a curved product, e.g. a smoked sausage. It is possible to induce a curved form in a length of casing tube by heating the length of tube in its totality on one side.

For instance, the heating means shown in Fig. 1 may direct more heat on one side onto the passing, shirred tube than on the other side.

It is clear that the apparatus according to the invention is not restricted to the embodiment described. For instance, the floating mandrel may be arranged horizontally instead of vertically. Furthermore, other suitable shirring means in addition to wheels and air jet pulses, are e.g. endless belts or chains on either side of the mandrel with rubber flaps and the like attached thereto at irregular intervals. Instead of being coiled on the reel 12, the tube treated by the shirring means and the heating means may be subsequently rolled up or cut to lengths that are closed on one end, e.g. with a rope loop from which the tube length stuffed with product can be suspended.

## Claims

1. A method of manufacturing a tubular casing of synthetic plastics material, the casing being such that a paste-like product packaged therein has the appearance of a product packaged in natural intestine, wherein, prior to stuffing the tube, the wall of a tube manufactured by extrusion with elongation is at least temporarily shirred to form pleats or folds in the tube wall which are irregularly distributed both axially and circumferentially and differently dimensioned and the tube is conducted in the thus shirred form along heating means.

2. A method according to claim 1, characterized in that the irregular shirring in the tube wall is effected by exerting an external force, with force components of varying magnitude oriented towards the axis of the tube and in the direction of advance of the tube.

3. An apparatus for performing the method according to any one of the preceding claims, comprising a mandrel, means for guiding a casing tube axially around the mandrel, said guide means comprising a pair of pull-through rolls, means for keeping the tube in inflated condition in the mandrel zone and shirring means in juxtaposition to the mandrel, characterized in that heating means are provided behind the shirring means, said shirring means are such as to form pleats and folds in the tube wall which are irregularly distributed both axially and circumferentially and differently dimensioned.

4. An apparatus according to claim 3, characterized in that the mandrel is a vertically oriented floating mandrel and the pull-through rolls of the tube are disposed underneath and above the mandrel.

5. An apparatus according to claim 3 or 4, characterized in that the shirring means are wheels with projections of different lengths and the wheels are relatively mounted in such a manner that at the moment when a relatively long projection is in contact with the tube wall, the opposite wheel does not make contact with the tube or makes contact therewith with a relatively short projection.

6. An apparatus according to claim 3 or 4, characterized in that the shirring means are adapted for directing air jet pulses to the tube wall.

7. An apparatus according to claim 3 or 4, characterized in that the shirring means are endless flexible carriers, such as belts or chains, for projections having irregular lengths and/or positions.

8. A product in a casing manufactured by the method according to any one of claims 1-2 and shirred to form a caterpillar.

9. A tubular casing manufactured by the method according to any one of claims 1-2, in the form of lengths closed at one end by a clip, rope loop or the like, whether or not shirred to form a caterpillar.

## Patentansprüche

1. Verfahren zur Herstellung einer schlauchförmigen Hülle aus synthetischem Kunststoffmaterial, welche Hülle so beschaffen ist, dass ein darin verpacktes pastenartiges Produkt wie ein in natürlichen Darm verpacktes Produkt aussieht, wobei vor dem Stopfen des Schlauches die Wand eines durch Dehnungsextrusion hergestellten Schlauches mindestens vorübergehend gerafft wird, um Falten in der Schlauchwand zu bilden, die sowohl in axialer als auch in Umfangsrichtung unregelmässig verteilt und unterschiedlich bemessen sind, und der Schlauch in der so gerafften Form an Heizmitteln vorbeigeführt wird.

2. Verfahren nach Anspruch 1, dadurch gekennzeichnet, dass die unregelmässige Faltenbildung in der Schlauchwand durch Ausübung einer äusseren Kraft veranlasst wird, wobei die Kraftkomponenten verschiedener Grösse gegen die Achse des Schlauches und in dessen Vorschubrichtung orientiert sind.

3. Vorrichtung zur Durchführung des Verfahrens nach einem der vorhergehenden Ansprüche, versehen mit einem Dorn, Mitteln zur Führung einer schlauchförmigen Hülle in Axialrichtung um den Dorn, welche Führungsmittel ein Paar Transportrollen umfassen, Mitteln zur Aufrechterhaltung des Schlauches im aufgeblasenen Zustand in der Dornzone und Rafforganen neben dem Dorn, dadurch gekennzeichnet, dass hinter den Rafforganen Heizmittel vorgesehen sind, wobei die Rafforgane so beschaffen sind, dass sie in der Schlauchwand Falten bilden, die sowohl in axialer als auch in Umfangsrichtung unregelmässig verteilt und unterschiedlich bemessen sind.

4. Vorrichtung nach Anspruch 3, dadurch gekennzeichnet, dass der Dorn ein vertikal orientierter fliegender Dorn ist und die Transportrollen des Schlauches unterhalb und oberhalb des Dornes angeordnet sind.

5. Vorrichtung nach Anspruch 3 oder 4, dadurch gekennzeichnet, dass die Rafforgane Räder mit Vorsprüngen verschiedener Länge sind und die Räder relativ zueinander so angeordnet sind, dass in dem Moment, dass ein verhältnismässiger langer Vorsprung mit der Schlauchwand in Berührung ist, das gegenüberliegende Rad nicht mit dem Schlauch in Berührung ist oder mit einem verhältnismässig kurzen Vorsprung damit in Berührung ist.

6. Vorrichtung nach Anspruch 3 oder 4, dadurch gekennzeichnet, dass die Rafforgane dazu eingerichtet sind, Luftstrahlimpulse gegen die Schlauchwand zu richten.

7. Vorrichtung nach Anspruch 3 oder 4, dadurch gekennzeichnet, dass die Rafforgane endlose flexible Träger, z.B. Riemen oder Ketten, für Vorsprünge mit unregelmässiger Länge und/oder Positionen sind.

8. Produkt in einder durch das Verfahren nach einem der Ansprüche 1-2 hergestellten und zu einer Raupe gerafften Hülle.

9. Schlauchförmige Hülle, hergestellt durch das Verfahren nach einem der Ansprüche 1-2, in Form von durch eine Klammer, Fadenschleife od.dgl. an einem Ende geschlossenen, ggf. zu einer Raupe gerafften Längen.

**Revendications**

1. Une méthode de fabriquer une enveloppe tubulaire en matière plastique, ladite enveloppe étant telle qu'un produit pâteux y contenu a l'apparence d'un produit emballé dans un intestin naturel ou, avant de rembourrer le tube, la paroi d'un tube fabriqué par extrusion avec allongement est du moins temporairement plissée pour former des plis dans la paroi du tube qui sont répartis irrégulièrement aussi, bien axialement que circonférentiellement et de dimensions différentes, et le tube est conduit dans la forme ainsi plissée le long de moyens de chauffage.

2. Une méthode selon la revendication 1, caractérisée en ce que le plissage irrégulier dans la paroi du tube s'effectue par l'exercice d'une force externe, avec des composamtes de force de grandeur variable étant orientées vers l'axe du tube et dans la direction d'avancement du tube.

3. Un appareil pour effectuer la méthode selon l'une quelconque des revendications précédentes, comprenant un mandrin, des moyens pour guider une enveloppe axialement autour du mandrin, lesdits moyens de guidage comprenant une paire de rouleaux de transport, des moyens pour maintenir le tube en condition gonflée dans la zone du mandrin et des moyens de plissage juxtaposés au mandrin, caractérisé en ce que les moyens de chauffage sont arrangés derrière les moyens de plissage, lesdits moyens de plissage étant agencés de telle sorte à former des plis dans la paroi du tube qui sont répartis irrégulièrement tant axialement que circonférentiellement et ayant des dimensions différentes.

4. Un appareil selon la revendication 3, caractérisé en ce que le mandrin est un mandrin flottant orienté verticalement et les rouleaux de transport du tube sont prévus audessous et au-dessus du mandrin.

5. Un appareil selon la revendication 3 ou 4, caractérisé en ce que les moyens de plissage sont des roues à projections de longueurs différentes et les roues sont montées relativement de telle façon qu'au moment où une projection relativement longue est en contact avec la paroi du tube, la roue opposée ne fait pas contact avec le tube ou est en contact avec lui avec une projection relativement courte.

6. Un appareil selon la revendication 3 ou 4, caractérisé en ce que les moyens de plissage sont arrangés à diriger des impulsions de jets d'air vers la paroi du tube.

7. Un appareil selon la revendication 3 ou 4, caractérisé en ce que les moyens de plissage sont des transporteurs flexibles sans fin, tels que des bandes ou des chaînes, pour des projections ayant des longueurs et/ou des positions irrégulières.

8. Un produit dans une enveloppe fabriquée par la méthode selon l'une quelconque des revendications 1-2, et plissée pour former une chenille.

9. Une enveloppe tubulaire fabriquée par la méthode selon l'une quelconque des revendications 1-2, dans la forme de longueurs fermées à une extrémité par une pince, un boucle de ficelle ou similaire, plissée ou non plissée, pour former une chenille.

EP 0 180 666 B1

FIG.1

FIG.3

FIG.2

1

FIG.1a